# EUROPEAN PATENT SPECIFICATION

(11) **EP 3 928 850 B1**
(45) Date of publication and mention of the grant of the patent: **28.01.2026**
(21) Application number: 20182427.3
(22) Date of filing: 26.06.2020
(51) Int. Cl.: B01D 29/21, B01D 29/58, B01D 29/96, B01D 35/18, B01D 36/00

(54) **FILTER ELEMENT WITH ATTACHMENTS TO A FILTER HOUSING WITH IMPROVED PROTECTION FROM DAMAGE DURING INSTALLATION**
FILTERELEMENT MIT AUFSÄTZEN AN EIN FILTERGEHÄUSE MIT VERBESSERTEM SCHUTZ VOR BESCHÄDIGUNGEN WÄHREND DER MONTAGE
ÉLÉMENT DE FILTRE AVEC FIXATIONS À UN BOÎTIER DE FILTRE PRÉSENTANT UNE MEILLEURE PROTECTION CONTRE LES DOMMAGES PENDANT L'INSTALLATION

(43) Date of publication of application: 29.12.2021
(73) Proprietor: MANN+HUMMEL GmbH, 71636 Ludwigsburg (DE)
(72) Inventor: Pflüger, Frank, 74343 Sachsenheim (DE); Dietz, Eugen, 74357 Bönnigheim (DE); Gangappa, Paramesh, 560085 Bangalore Karnataka (IN); Loganathan, Vinoth Kumar, 602024 Chennai Tamil Nadu (IN)
(74) Representative: Mann + Hummel Intellectual Property

(56) References cited:
- EP-A1- 3 643 386
- WO-A1-2016/079029
- WO-A1-2017/050369
- DE-A1- 102015 208 426
- US-A1- 2017 361 252

## Description

### Technical field

The invention refers to a filter element with attachments to a filter housing with improved protection from damage during installation and a fluid filter with such a filter element. The invention also relates to a method for installing a filter element on a filter housing by such an attachment.

### Prior art

US 2017/361252 AA provides a hollow filter element of a fluid filter having a filter element-associated retention/carrier device of a retention/carrier system retaining the filter element in a first housing section of a filter housing during installation/removal in or from a second housing section by rotation and/or insertion movement. A space axially adjacent to the tensile face is connected on the rear side to a through hole for guiding through the filter housing-associated retention/carrier part.

From WO 2017/050369 A1 a filter insert is provided for being removably arranged in a filter housing and includes a first actuation arrangement positioned at a first end of the filter insert, wherein the first actuation arrangement is adapted for being actuated by a corresponding second actuation arrangement of a filter housing lid for controlling a relative, axial movement between the filter insert and the filter housing lid.

WO 2016/079029 A1 reveals a filter with a filter element and a filter housing. A support tube for the discharge of filtered liquid, fluid or fuel is arranged in a central opening of the filter element. The filter element can be connected to the filter housing via a bayonet lock. A bayonet projection of the bayonet lock protrudes beyond an upper end plate of the filter element in the direction of the longitudinal axis of the filter element. The bayonet projection can engage in a bayonet holder of the filter housing to attach the filter element to the filter housing.

The bayonet projection can easily break off if the filter element is guided along the support tube in an incorrect mounting position and the bayonet projection is thereby pressed against the bayonet holder.

It is therefore the object of the invention to provide a filter element whose attachment to a filter housing offers better protection against damage during installation of the filter element on the filter housing and a fluid filter with such a filter element. Another object of the invention is to indicate a method for installing a filter element on a filter housing by such an attachment.

This object is solved by a filter element according to claim 1, a fluid filter according to claim 9 and a method according to claim 11. The subjects of the depending claims are preferred examples.

### Disclosure of the invention

The filter element for a fluid filter has a water separator, a filter bellows and a central opening for inserting a support tube of a fluid filter. It is characterized in that the filter element has a retaining projection and/or a retaining recess for attaching the filter element to the support tube. The retaining projection and/or the retaining recess is arranged above the bottom side of the filter bellows. The retaining projection protrudes radially inwards in the central opening to engage in a retaining recess in the support tube and/or the retaining recess in the central opening is designed to accommodate a retaining projection of the support tube protruding radially outwards. The retaining projection of the filter element can be inserted into the retaining recess of the support tube without the risk of the retaining projection breaking off, allowing the filter element to be attached to the support tube connected to the filter housing without damaging the filter element. This simplifies the installation of the filter element. Within the context of the invention at hand, the terms "top", "bottom", "axial", "radial", etc. refer to the fluid filter in the mounted state.

The retaining projection and the retaining recess have a slanted section for guiding the filter element in a rotational movement of the filter element in the circumferential direction of the support tube. In this way, the filter element can be brought into a suitable mounting position by the retaining projection and/or the retaining recess of the filter element by sliding along the corresponding retaining recess and/or retaining projection of the support tube. This applies, for example, when bayonet locks are additionally used to attach the filter element to the filter housing.

The filter element can have a further retaining projection and/or a further retaining recess, which in particular faces the retaining projection and/or the retaining recess. By means of a further retaining projection and/or a further retaining recess, the alignment and attachment of the filter element to the support tube can be carried out in a more stable manner.

The further retaining projection can be axially symmetrical to the retaining projection or the further retaining recess can be axially symmetrical to the retaining recess with respect to the longitudinal axis of the filter element. In this case, the filter element can be formed symmetrically.

The filter element can be designed in the form of a diesel fuel filter. The filter element according to the invention can be used in particular with vehicle engines using diesel fuel.

The water separator can be of multi-stage design, in particular of three-stage design with a coalescer, a gap and a fleece. Water droplets from separated water can form at the coalescer, e.g. in the form of a sieve, when the fluid to be filtered flows through the coalescer. A retaining element can be located at the coalescer, which supports the coalescer. This retaining element can be arranged in a sedimentation gap of the three-stage water separator. The water droplets can be deposited on the fleece located fluidically behind the coalescer. Then the droplets can flow under the influence of gravity through the sedimentation gap into a water collection chamber of the filter housing.

The filter element can have a sealing ring on the peripheral side in the region of the lower axial end of the filter element. Such a sealing ring can separate a raw side from a clean side of the liquid filter. The sealing ring can prevent the flow of liquid or fuel from the raw side to the clean side or into the water collection chamber.

The retaining projection is arranged below the upper side of the filter element below an upper end plate of the filter element. This arrangement protects the retaining projection against damage.

The retaining projection has on its upper side a slanted section with the shape of a gable roof. Then the retaining projection can be guided along the corresponding retaining recess on two sides.

A fluid filter can have a filter housing, a support tube and a filter element according to the invention.

The support tube can be designed as a water-in-fluid tube. The water-in-fluid tube may contain electrodes that measure the water level in a water collecting chamber of the fluid filter to indicate when the water collecting chamber must be emptied.

The retaining recess, along which the retaining projection of the filter element can be guided in order to attach the filter element to the support tube, can be formed on the outside of the support tube in the radial direction. Alternatively or additionally, the retaining projection, along which the retaining recess of the filter element can be guided in order to attach the filter element to the support tube, can be formed on the outside of the support tube in the radial direction. This allows the retaining projection of the filter element to be easily guided along the corresponding retaining recess of the support tube and/or the retaining recess of the filter element along the corresponding retaining projection of the support tube.

The support tube of the fluid filter can be attached to a heating plate of the fluid filter. Then the fluid, especially diesel fuel, can be heated and the filtered fluid can subsequently be discharged using a compact design of the fluid filter.

A method for mounting a fluid filter according to the invention is characterized in that
a) the support tube is inserted into the central opening of the filter element and
b) the retaining projection and/or the retaining recess is guided along a corresponding retaining recess and/or a corresponding retaining projection of the support tube, the filter element being fastened to the support tube by a rotational movement of the retaining projection and/or the retaining recess in the circumferential direction of the support tube.

When exerting force on the filter element in the direction of the longitudinal axis of the support tube during installation of the filter element, the filter element can be moved into a suitable mounting position by guiding the support projection and/or the support recess of the filter element along the corresponding support recess and/or support projection of the support tube. The filter element can be attached to the support tube by a simple rotary movement in the direction of the circumference of the support tube, whereby the retaining projection and/or the retaining recess of the filter element engages with the corresponding retaining recess and/or retaining projection of the support tube. This reduces the risk of damage to the retaining projection and/or the retaining recess of the filter element during installation.

### Brief description of drawings

Other advantages and features of the invention will be appreciated from the following description of embodiments of the invention with reference to the figures of the drawings, which show significant details, and from the claims. The individual features may each be carried out individually or carried out together in any combination in variants of the invention.
- Fig. 1: shows a longitudinal section of a fluid filter according to a first embodiment of the invention;
- Fig. 2: shows a longitudinal section of a filter element according to the first embodiment of the invention attached to a part of a filter housing;
- Fig. 3a: shows a longitudinal section of a filter element according to a second embodiment of the invention;
- Fig. 3b: shows a top view of the filter element according to the second embodiment of the invention;
- Fig. 4a: shows a longitudinal section of a filter element according to a third embodiment of the invention;
- Fig. 4b: shows a top view of the filter element according to the third embodiment of the invention; and
- Fig. 5: schematically shows a method of mounting a filter element on a support tube according to the invention.

### Embodiments of the invention

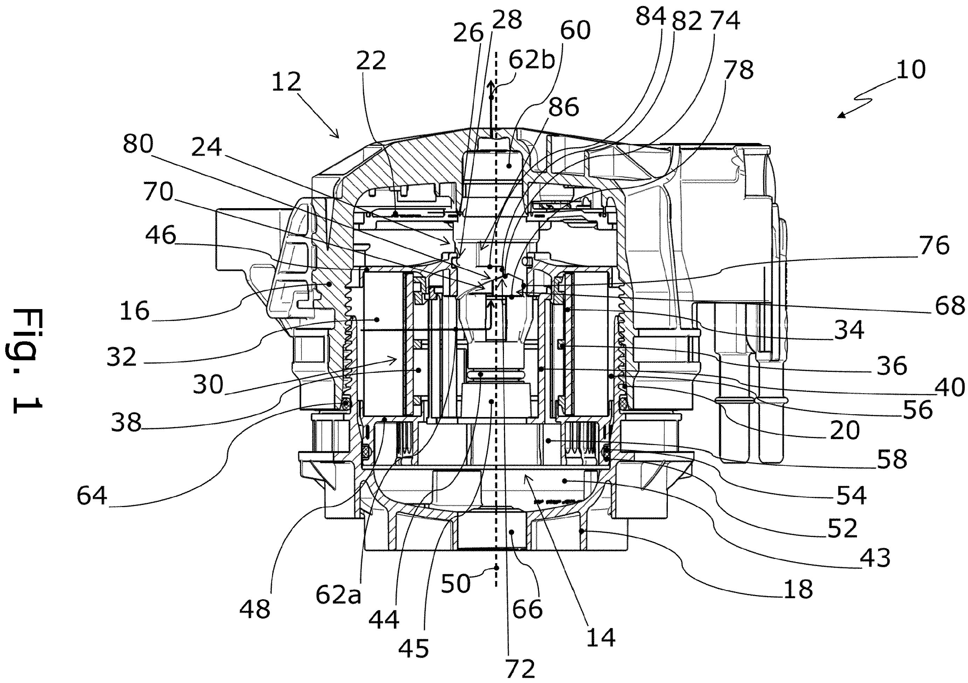

Fig. 1 shows a longitudinal section of a two-part fluid filter 10, here a fuel filter, in particular a diesel filter, with a filter housing **12** and a filter element **14** in a first embodiment installed in the filter housing 12. The filter housing 12 has a filter housing body **16** and a cover 18. The cover 18 is screwed onto the filter housing body 16 via a thread 20. To replace the filter element 14, the cover 18 is unscrewed from the filter housing body 16.

A heating plate **22** is attached to the filter housing 12 above the filter element 14. A support tube **24** runs through an opening **26** in the middle of the heating plate 22 and through a central opening **28** of the filter element 14.

To filter the fluid, the filter element 14 has a three-stage water separator **30** in combination with a filter bellows 32. A coalescer **34** of the three-stage water separator 30 in the form of a sieve is arranged fluidically behind the filter bellows 32. A retaining element **36** is located at the coalescer 34, which supports the coalescer 34 and the filter bellows 32. This retaining element 36 is arranged in a sedimentation gap **38** of the three-stage water separator 30. Water droplets form at the coalescer 34 when the fluid to be filtered flows through the coalescer 34. A fleece **40** is located fluidically behind the coalescer 34. The water droplets are deposited on the fleece 40. They flow under the influence of gravity through the sedimentation gap 38 into a water collection chamber **43** of the filter housing 12. A sealing ring **44** on a connection piece **45** prevents filtered fluid from flowing off into the water collection chamber 43.

The filter element 14 has an upper end plate **46** and a lower end plate **48** along its longitudinal axis **50** adjacent to the filter bellows 32. The lower end plate 48 has a sealing groove **52** for an inner sealing element **54.** The inner sealing element 54 is designed radially, in particular in the form of an O-ring. The inner sealing element 54 separates a raw side **56** from a clean side **58** of the fluid filter 10. The inner sealing element 54 prevents the flow of fluid or fuel from the raw side 56 to the clean side 58 or into the water collection chamber 43. The unfiltered fluid, in particular raw diesel, can flow from the raw side 56 of the fluid filter 10 through the three-stage water separator 30 into the support tube 24. The filtered fluid, in particular pure diesel, can then exit the support tube 24 through an outlet **60** of the support tube 24. This flow of the fluid is marked with arrows **62a, 62b** in Fig. 1.

When the cover 18 is unscrewed, the inner sealing element or inner sealing ring 54 is no longer in engagement with the cover 18. Unfiltered fluid can flow into the cover 18 from the raw side 56. The spillage of liquid into the environment is prevented by an outer sealing ring **64** which is in particular designed as an O-ring. The seal between the cover 18 and the filter housing body 16 is still closed by the outer sealing ring 64 when the seal formed by the inner sealing ring 54 between the filter element 14 and the cover 18 is already removed. In order to ensure this mechanism, the filter element 14 (contrary to its position shown in Fig. 1) has to remain attached to the filter housing body 16 during removal of the support tube 24, as described later on.

The support tube 24 can be designed as a water-in-fluid tube. In this case, electrodes are arranged in the support tube 24 to detect when the maximum level of water in the water collection chamber 43 is reached. The fluid filter 10 has a fluid drain **66** or fuel drain through which separated water can be drained.

In order to attach the filter element 14 to the support tube 24, the filter element 14 has a retaining projection **68.** The support tube 24 has a corresponding retaining recess **70.** The retaining projection 68 has an upper side surface **72** with a slanted section **74, in** particular in the form of a gable roof. The vertical side surfaces **76** and the lower side surface **78** of the retaining projection 68 are plane. The retaining recess 70 has a bevelled section **80** corresponding to one side of the slope 72 of the retaining projection 68. A vertically oriented section **82** of the retaining recess 70 is located at this bevelled section 80. The vertically oriented section 82 is followed by a horizontally oriented section **84** of the retaining recess 70. The horizontally aligned section 84 forms part of a stop **86** of the retaining recess 70 into which the retaining projection 68 can be inserted to lock the retaining projection 68. The horizontally aligned section 84 and the vertically aligned section 82 of the retaining recess 70 have the shape of the upper case letter L. The vertically oriented section 82, the horizontally oriented section 84 and the bevelled section 80 schematically have the shape of a nose. The retaining projection 68 can be inserted into the stop 86 along the bevelled section 80, the vertically oriented section 82 and the horizontally oriented section 84 in order to fix the filter element 14 to the support tube 24.

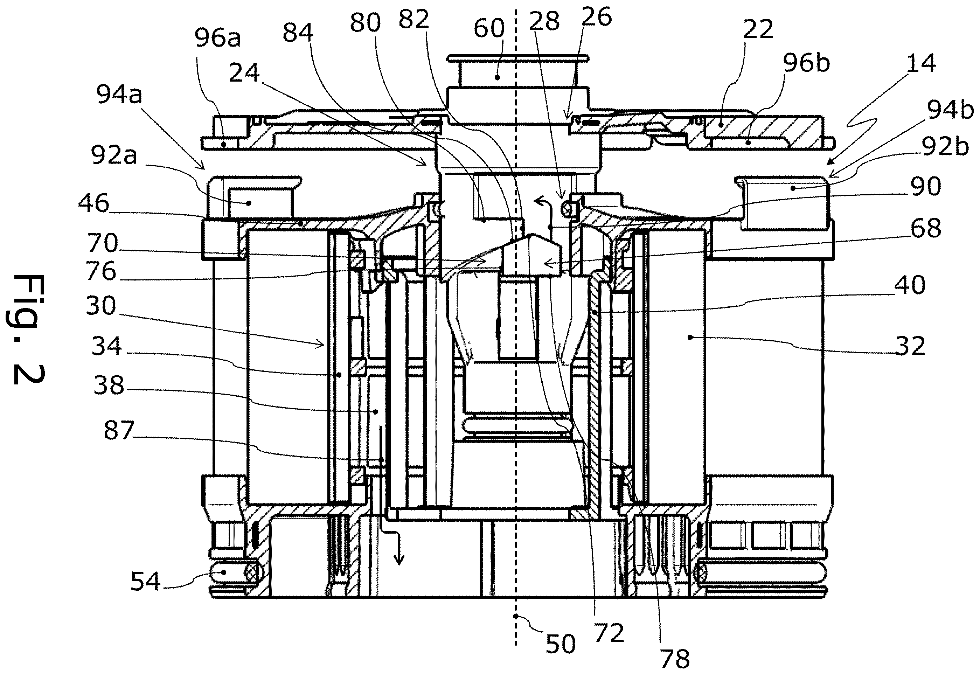

**Fig. 2** shows a longitudinal section of the filter element 14 and the support tube 24 without the filter housing 12 (see fig. 1). The filter element 14 comprises the filter bellows 32 and the three-stage water separator 30 with the coalescer 34, the sedimentation gap 38 of the water separator 30 and the fleece 40 as well as the inner sealing element 54. The flow of separated water along the fleece 40 through the sedimentation gap 38 in the direction of the water collection chamber 43 (see. fig. 1) is marked with an arrow **87.**

The support tube 24 comprises the outlet 60. It is located in the opening 26 in the middle of the heating plate 22 and in the central opening 28 of the filter element 14.

When attaching the filter element 14 to the support tube 24, the retaining projection 68 with its upper inclined side surface 72 is guided along the corresponding inclined section 80 of the retaining recess 70 of the support tube 24. The filter element 14 performs a first rotary movement in the circumferential direction of the support tube 24. At the same time, the filter element 14 moves in a straight line in the direction of the longitudinal axis 50 of the support tube 24. Then the retaining projection 68 with its plane vertical side surface 76 is guided along the corresponding vertical section 82 of the retaining recess 70 with a straight-line movement of the retaining projection 68 with respect to the longitudinal axis 50 of the support tube 24. In a final step, the plane lower side surface 78 of the retaining projection 68 is guided along the corresponding horizontal section 84 of the retaining recess 70. The retaining projection 68 performs a second rotary movement in the circumferential direction of the support tube 24, which is opposite to the first rotary movement. The movement of the retaining projection 68 during fastening of the filter element 14 to the support tube 24 is indicated by an arrow **90** in Fig. 2.

Bayonet noses **92a, 92b** are attached to the upper end plate 46. The bayonet noses 92a, 92b form bayonet fittings **94a, 94b** together with corresponding locking projection **96a, 96b.** The bayonet fittings 94a, 94b serve for additional fastening of the filter element 14 to the filter housing 12.

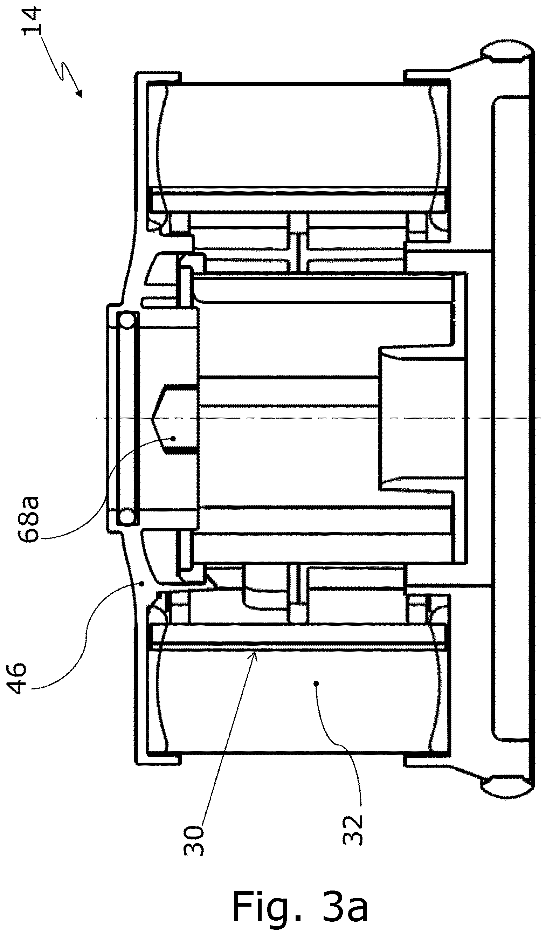

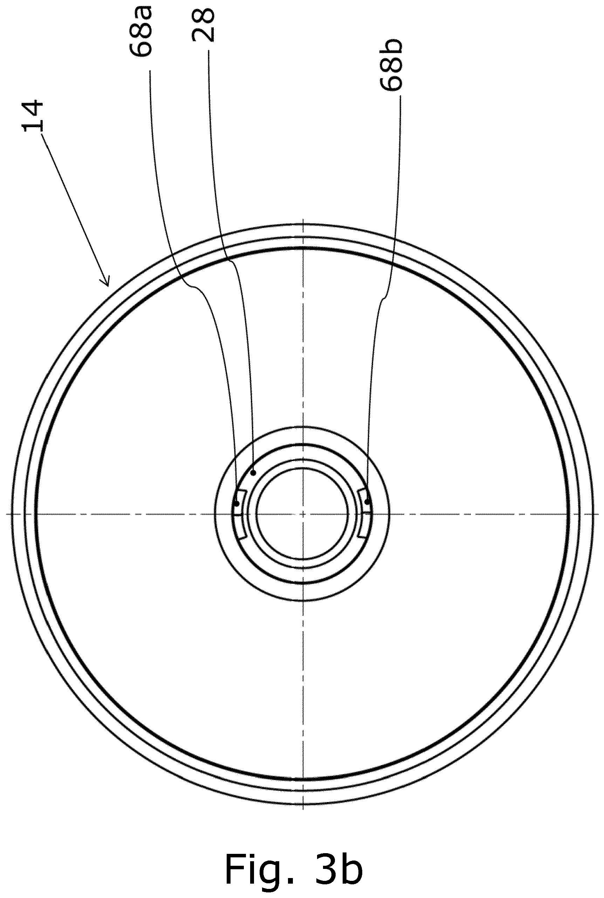

**Fig. 3a** shows a longitudinal section of a second embodiment of the filter element 14 with the filter bellows 32 and the water separator 30. **Fig. 3b** shows a top view of the second embodiment of the filter element 14. The difference to the first embodiment is that the filter element 14 in the second embodiment has no bayonet noses 92a, 92b (see fig. 2).

It is therefore only attached to the support tube 24 via two retaining projections 68a, 68b (fig. 3a shows the retaining projection 68a). The two retaining projections 68a, 68b are located opposite each other in the central opening 28 of the upper end plate 46 of the filter element 14.

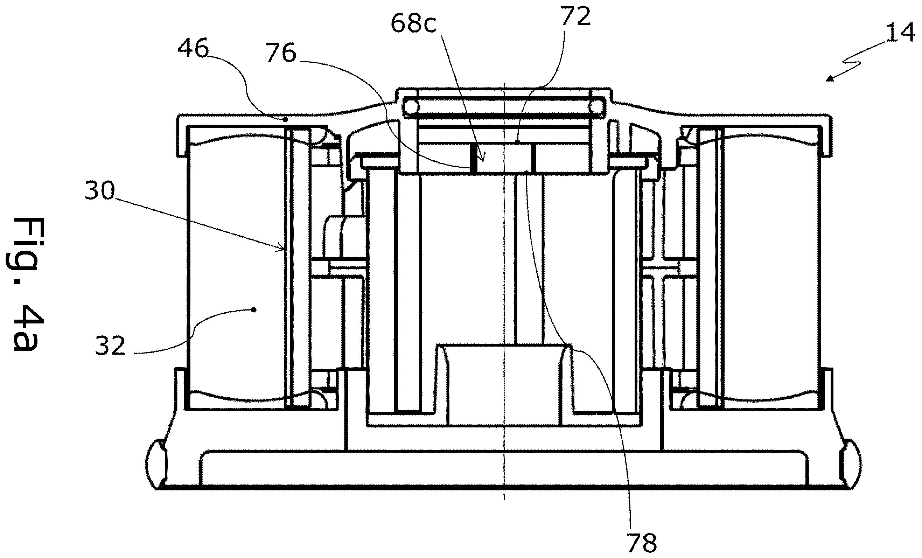

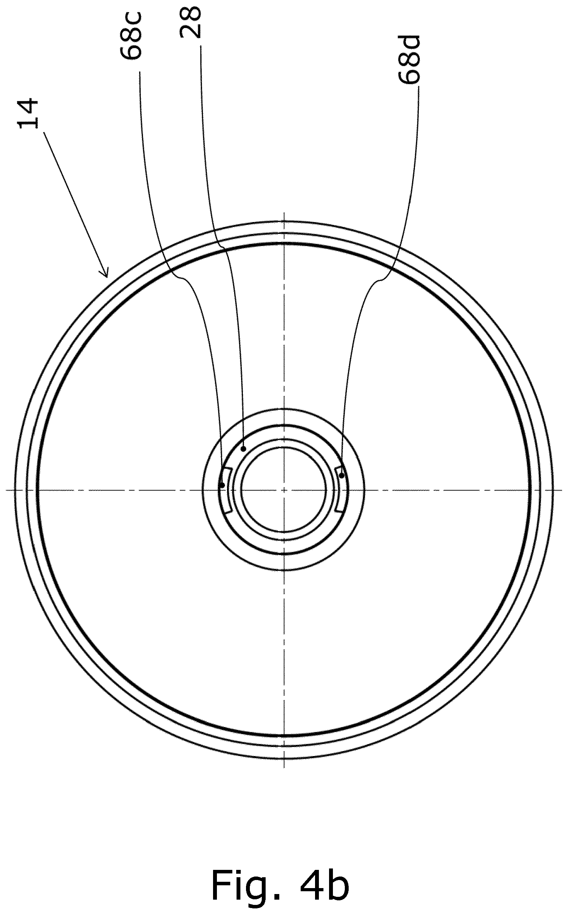

**Fig. 4a** shows a longitudinal section of a third embodiment of the filter element 14 with the filter bellows 32 and the water separator 30. **Fig. 4b** shows a top view of the third embodiment of the filter element 14 with two opposite retaining projections 68c, 68d (fig. 4a shows the retaining projection 68c). The two retaining projections 68c, 68d are located opposite each other in the central opening 28 of the upper end plate 46 of the filter element 14. The difference to the second embodiment is that the upper side surfaces 72 of the retaining projections 68c, 68d are not inclined (see figure 1). All sides 72, 76, 78 of the retaining projections 68c, 68d are plane. In particular, such a retaining projection 68c, 68d can be guided with its flat vertical side surface 76 in a straight line along the longitudinal axis 50 (see. fig. 1) of the support tube 24 along a corresponding vertically aligned section 82 of the retaining recess 70 of the support tube 24 (see. fig. 1). Subsequently, the lower flat side surface 78 of the retaining projection 68c, 68d can be guided along a corresponding horizontal portion 84 (see. fig. 1) of the retaining recess 70 of the support tube 24 in a rotary movement of the retaining projection 68c, 68d in the circumferential direction of the support tube 24 to attach the filter element 14 to the support tube 24 (see. fig. 2).

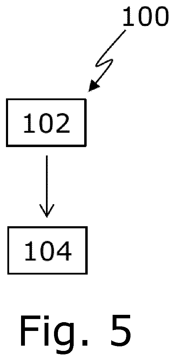

**Fig. 5** shows a method **100** of mounting a filter element 14 according to the invention on a support tube 24. In a first step **102,** the support tube 24 is inserted into the central opening 28 of the filter element 14. In a second step **104,** the retaining projection 68; 68a, 68b; 68c, 68d and/or a retaining recess is guided along the corresponding retaining projection and/or retaining recess 70 of the support tube 24. The filter element 14 is attached to the support tube 24 and thus to the filter housing 12 by a rotary movement of the retaining projection 68; 68a, 68b; 68c, 68d and/or the retaining recess in the circumferential direction of the support tube 24.

In summary, the invention relates to a fluid filter 10, with a water separator 30, a filter bellows 32 and a central opening 28 for inserting a support tube 24 of the fluid filter 10. The fluid filter 10 is characterized in that a retaining projection 68; 68a, 68b; 68c, 68d of the filter element 10 for fixing the filter element 10 to the support tube 24 is located above the bottom side of the filter bellows 32. The retaining projection 68; 68a, 68b; 68c, 68d can be inserted into a retaining recess 70 in the support tube 24. For this purpose, the retaining projection 68; 68a, 68b; 68c, 68d is orientend into the interior of the central opening 28. Alternatively or additionally, a retaining recess in the central opening can accommodate a retaining projection of the support tube 24 that is oriented radially outwards.

## Claims

1. Fuel filter element (14) for a fuel filter (10), with a water separator (30), a filter bellows (32) and a central opening (28) for inserting a support tube (24) of the fuel filter (10), **characterized in that** the filter element (14) has a retaining projection (68; 68a, 68b; 68c, 68d) for attaching the filter element (14) to the support tube (24), the retaining projection (68; 68a, 68b) being arranged above the bottom side of the filter bellows, and below an upper end plate (46) of the filter element (14), wherein
the retaining projection (68; 68a, 68b) protrudes radially inwards in the central opening (28) to engage in a retaining recess (70) in the support tube (24) and has on its upper side a slanted section (74) for guiding the filter element in a rotational movement of the filter element in the circumferential direction of the support tube, wherein the vertical side surfaces (76) and the lower side surface (78) of the retaining projection (68) are plane.

2. Filter element according to claim 1, **characterized in that** the filter element (14) has a further retaining projection (68; 68a, 68b) which in particular faces the retaining projection (68; 68a, 68b).

3. Filter element according to claim 2, **characterized in that** the further retaining projection (68; 68a, 68b) is axially symmetrical to the retaining projection (68; 68a, 68b) with respect to the longitudinal axis (50) of the filter element (14).

4. Filter element according to one of the previous claims, **characterized in that** the filter element (14) is designed in the form of a diesel fuel filter.

5. Filter element according to one of the previous claims, **characterized in that** the water separator (30) is of multi-stage design, in particular of three-stage design with a coalescer (34), a gap (38) and a fleece (40).

6. Filter element according to one of the previous claims, **characterized in that** the filter element (14) has a sealing ring (54) on the peripheral side in the region of the lower axial end of the filter element (14).

7. Fuel filter (10) with a filter housing (12), a support tube (24) and a filter element (14) according to one of the claims 1 to 6.

8. Fuel filter according to claim 7, **characterized in that** the support tube (24) is designed as a water-in-fluid tube.

9. Fuel filter according to one of claims 7 or 8, **characterized in that** on the outside of the support tube (24) in the radial direction
the retaining recess (70) is formed, the retaining recess (70) having a bevelled section (80) along which the slanted portion (74) of the retaining projection (68; 68a, 68b) of the filter element (14) can be guided and the horizontally aligned section (84) forms part of a stop (86) into which the retaining projection (68; 68a, 68b) is insertable in order to attach the filter element (14) to the support tube (24).

10. Fuel filter according to one of claims 7 to 9, **characterized in that** the support tube (24) of the fuel filter (10) is attached to a heating plate (22) of the fuel filter (10).

11. Method for mounting a fuel filter (10) according to one of claims 7 to 10, **characterized in that**
a) the support tube (24) is inserted into the central opening (28) of the filter element (14) and
b) the slanted portion (74) of the retaining projection (68; 68a, 68b) is guided along a corresponding bevelled section (80) of a corresponding retaining recess (70) of the support tube (24) until the retaining projection (68; 68a, 68b) is inserted into a stop (86) partly formed by a horizontally aligned section (84) of the retaining recess (70), the filter element (14) being fastened to the support tube (24) by a rotational movement of the retaining projection (68; 68a, 68b) in the circumferential direction of the support tube (24).

## Patentansprüche

1. Kraftstofffilterelement (14) für einen Kraftstofffilter (10) mit einem Wasserabscheider (30), einem Filterbalg (32) und einer zentralen Öffnung (28) zum Einführen eines Stützrohrs (24) des Kraftstofffilters (10), **dadurch gekennzeichnet, dass** das Filterelement (14) einen Haltevorsprung (68; 68a, 68b; 68c, 68d) zum Befestigen des Filterelements (14) an dem Stützrohr (24) hat, wobei der Haltevorsprung (68; 68a, 68b) oberhalb der Unterseite des Filterbalgs und unterhalb einer oberen Endplatte (46) des Filterelements (14) angeordnet ist, wobei
der Haltevorsprung (68; 68a, 68b) in der zentralen Öffnung (28) radial nach innen vorsteht, um in eine Halteausnehmung (70) im Stützrohr (24) einzugreifen, und an seiner Oberseite einen schrägen Abschnitt (74) zum Führen des Filterelements bei einer Drehbewegung des Filterelements in Umfangsrichtung des Stützrohrs hat, wobei die vertikalen Seitenflächen (76) und die untere Seitenfläche (78) des Haltevorsprungs (68) eben sind.

2. Filterelement nach Anspruch 1, **dadurch gekennzeichnet, dass** das Filterelement (14) einen weiteren Haltevorsprung (68; 68a, 68b) hat, der insbesondere dem Haltevorsprung (68; 68a, 68b) gegenüberliegt.

3. Filterelement nach Anspruch 2, **dadurch gekennzeichnet, dass** der weitere Haltevorsprung (68; 68a, 68b) in Bezug auf die Längsachse (50) des Filterelements (14) axialsymmetrisch zum Haltevorsprung (68; 68a, 68b) ist.

4. Filterelement nach einem der obigen Ansprüche, **dadurch gekennzeichnet, dass** das Filterelement (14) in Form eines Dieselkraftstofffilters ausgebildet ist.

5. Filterelement nach einem der obigen Ansprüche, **dadurch gekennzeichnet, dass** der Wasserabscheider (30) mehrstufig, insbesondere dreistufig mit einem Koaleszenzfilter (34), einem Spalt (38) und einem Vlies (40) ausgebildet ist.

6. Filterelement nach einem der obigen Ansprüche, **dadurch gekennzeichnet, dass** das Filterelement (14) an der Umfangsseite im Bereich des unteren axialen Endes des Filterelements (14) einen Dichtungsring (54) hat.

7. Kraftstofffilter (10) mit einem Filtergehäuse (12), einem Stützrohr (24) und einem Filterelement (14) nach einem der Ansprüche 1 bis 6.

8. Kraftstofffilter nach Anspruch 7, **dadurch gekennzeichnet, dass** das Stützrohr (24) als Wasser-in-Flüssigkeit-Rohr ausgebildet ist.

9. Kraftstofffilter nach einem der Ansprüche 7 oder 8, **dadurch gekennzeichnet, dass** an der Außenseite des Stützrohrs (24) in radialer Richtung
die Halteausnehmung (70) ausgebildet ist, wobei die Halteausnehmung (70) einen abgeschrägten Abschnitt (80) hat, entlang dem der schräge Abschnitt (74) des Haltevorsprungs (68; 68a, 68b) des Filterelements (14) geführt werden kann, und der horizontal ausgerichtete Abschnitt (84) Teil eines Anschlags (86) ist, in den der Haltevorsprung (68; 68a, 68b) eingeführt werden kann, um das Filterelement (14) am Stützrohr (24) zu befestigen.

10. Kraftstofffilter nach einem der Ansprüche 7 bis 9, **dadurch gekennzeichnet, dass** das Stützrohr (24) des Kraftstofffilters (10) an einer Heizplatte (22) des Kraftstofffilters (10) befestigt ist.

11. Verfahren zum Einbau eines Kraftstofffilters (10) nach einem der Ansprüche 7 bis 10, **dadurch gekennzeichnet, dass**
a) das Stützrohr (24) in die zentrale Öffnung (28) des Filterelements (14) eingeführt wird und
b) der schräge Abschnitt (74) des Haltevorsprungs (68; 68a, 68b) entlang eines entsprechenden abgeschrägten Abschnitts (80) einer entsprechenden Halteausnehmung (70) des Stützrohrs (24) geführt wird, bis der Haltevorsprung (68; 68a, 68b) in einen Anschlag (86) eingeführt ist, der teilweise durch einen horizontal ausgerichteten Abschnitt (84) der Halteausnehmung (70) gebildet wird, wobei das Filterelement (14) durch eine Drehbewegung des Haltevorsprungs (68; 68a, 68b) in Umfangsrichtung des Stützrohrs (24) am Stützrohr (24) befestigt wird.

## Revendications

1. Élément de filtre (14) à carburant destiné à un filtre à carburant (10), avec un séparateur d'eau (30), un soufflet de filtre (32) et une ouverture centrale (28) permettant d'insérer un tube de support (24) du filtre à carburant (10), **caractérisé en ce que** l'élément de filtre (14) a une saillie de retenue (68 ; 68a, 68b; 68c, 68d) permettant de fixer l'élément de filtre (14) au tube de support (24), la saillie de retenue (68; 68a, 68b) étant agencée au-dessus du côté fond du soufflet de filtre, et en dessous d'une plaque d'extrémité supérieure (46) de l'élément de filtre (14), dans lequel
la saillie de retenue (68; 68a, 68b) fait saillie radialement vers l'intérieur dans l'ouverture centrale (28) pour venir en prise dans un évidement de retenue (70) dans le tube de support (24) et a sur son côté supérieur une section inclinée (74) permettant de guider l'élément de filtre dans un mouvement de rotation de l'élément de filtre dans la direction circonférentielle du tube de support, dans lequel les surfaces latérales verticales (76) et la surface latérale inférieure (78) de la saillie de retenue (68) sont planes.

2. Élément de filtre selon la revendication 1, **caractérisé en ce que** l'élément de filtre (14) a une saillie de retenue (68; 68a, 68b) supplémentaire qui en particulier fait face à la saillie de retenue (68; 68a, 68b).

3. Élément de filtre selon la revendication 2, **caractérisé en ce que** la saillie de retenue (68; 68a, 68b) supplémentaire est axialement symétrique à la saillie de retenue (68; 68a, 68b) par rapport à l'axe longitudinal (50) de l'élément de filtre (14).

4. Élément de filtre selon l'une quelconque des revendications précédentes, **caractérisé en ce que** l'élément de filtre (14) est conçu sous la forme d'un filtre à gazole.

5. Élément de filtre selon l'une quelconque des revendications précédentes, **caractérisé en ce que** le séparateur d'eau (30) est de conception à étages multiples, en particulier de conception à trois étages avec un coalesceur (34), un espace (38) et une nappe de fibres (40).

6. Élément de filtre selon l'une quelconque des revendications précédentes, **caractérisé en ce que** l'élément de filtre (14) a une bague d'étanchéité (54) sur le côté périphérique dans la région de l'extrémité axiale inférieure de l'élément de filtre (14).

7. Filtre à carburant (10) avec un boîtier de filtre (12), un tube de support (24) et un élément de filtre (14) selon l'une quelconque des revendications 1 à 6.

8. Filtre à carburant selon la revendication 7, **caractérisé en ce que** le tube de support (24) est conçu en tant que tube d'eau dans un fluide.

9. Filtre à carburant selon l'une quelconque des revendications 7 ou 8, **caractérisé en ce que** sur l'extérieur du tube de support (24) dans la direction radiale,
l'évidement de retenue (70) est formé, l'évidement de retenue (70) ayant une section biseautée (80) le long de laquelle la partie inclinée (74) de la saillie de retenue (68; 68a, 68b) de l'élément de filtre (14) peut être guidée et la section alignée horizontalement (84) fait partie d'une butée (86) dans laquelle la saillie de retenue (68; 68a, 68b) peut être insérée afin de fixer l'élément de filtre (14) au tube de support (24).

10. Filtre à carburant selon l'une quelconque des revendications 7 à 9, **caractérisé en ce que** le tube de support (24) du filtre à carburant (10) est fixé à une plaque chauffante (22) du filtre à carburant (10).

11. Procédé permettant de monter un filtre à carburant (10) selon l'une quelconque des revendications 7 à 10, **caractérisé en ce que**
a) le tube de support (24) est inséré dans l'ouverture centrale (28) de l'élément de filtre (14) et
b) la partie inclinée (74) de la saillie de retenue (68; 68a, 68b) est guidée le long d'une section biseautée (80) correspondante d'un évidement de retenue (70) correspondant du tube de support (24) jusqu'à ce que la saillie de retenue (68; 68a, 68b) soit insérée dans une butée (86) partiellement formée par une section alignée horizontalement (84) de l'évidement de retenue (70), l'élément de filtre (14) étant attaché au tube de support (24) par un mouvement de rotation de la saillie de retenue (68; 68a, 68b) dans la direction circonférentielle du tube de support (24).
